# EUROPEAN PATENT SPECIFICATION

(11) **EP 3 476 513 B1**
(45) Date of publication and mention of the grant of the patent: **23.02.2022**
(21) Application number: 17198711.8
(22) Date of filing: 26.10.2017
(51) Int. Cl.: B23D 57/00, B28D 5/04

(54) **WIRE SAW**
DRAHTSÄGE
SCIE À FIL

(43) Date of publication of application: 01.05.2019
(60) Divisional application: 21213874.7
(73) Proprietor: Precision Surfacing Solutions GmbH, 3645 Gwatt (Thun) (CH)
(72) Inventor: Frech, Gregor, 3012 Bern (CH); Baechler, Alex, 1648 Hauteville (CH); Wenger, Markus, 3752 Wimmis (CH)
(74) Representative: Patentbüro Paul Rosenich AG

(56) References cited:
- EP-A1- 2 586 554
- EP-A1- 2 650 070
- CH-A5- 677 895
- JP-A- 2012 206 224
- JP-U- H0 652 151

## Description

The invention relates to a wire saw according to the preamble of claim 1. JP2012206224A discloses a wire saw comprising a processing area with wire guiding rollers forming a wire web and a bobbin side area with bobbins around which cutting wire is wound. The bobbin side area has an opening that is opened and closed by a door formed in the side wall of the bobbin side area.

EP2586554A1 discloses a wire saw according to the preamble of claim 1, having a main frame for supporting a housing wherein the housing includes a first housing portion, in which a first wire guide assembly is housed, and a second housing portion, in which a second wire guide assembly is housed. The different housing portions may have openings and/or access doors such that the wire guide assembly, the wire management units and other components which might still be under operation are operated in an enclosed environment whilst the other components can be maintained, workpieces can be loaded or unloaded, or the like.

JPH07153724A discloses a wire saw for slicing silicon ingots. The wire saw comprises wire guide rollers supporting a wire web and spools for supplying cutting wire to the wire web and for taking-up cutting wire from the wire web. A housing cassette is provided with grooves for accommodating the silicon wafers

WO2013018556A1 discloses a wire saw comprising wire guide rollers across which the cutting wire is suspended in multiple loops. Bobbins are provided on the supply side and winding side of the wire web. Sensors are provided to measure the tension of cutting wire between the wire guide rollers and the bobbins.

Disadvantages in prior art occur due to the fact that the cutting area (comprising the wire guide rollers and the wire web) is not sufficiently separated from the area in which the pulleys and/or spools for (temporarily) storing cutting wire are arranged. Cutting liquid, dirt and material particles have an adverse impact on spools, and the wire thereon, deflection pulleys and tension means. Cleaning and maintenance of wire saws are time wasting and expensive procedures. Moreover, damages at the force measuring system and the pulley bearing may occur.

EP2650070A1 discloses a wire saw comprising wire guide rollers spanning a wire web a storage spools for unused wire on one side and used wire on the other side of the wire web. The storage spools are arranged in lateral housings.

The disadvantage of such a solution consists in the fact, that the accessibility of parts from outside the wire saw is very poor, and in a space-wasting design.

The object of the invention is to overcome the problems mentioned above and to provide a wire saw in which cutting wire that is not part of the cutting field as well as pulleys and/or spools for guiding and/or storing the cutting wire are efficiently protected from the adverse effects of cutting liquid, dirt and material particles. Further, the wire saw should have a space saving design and allow for optimal accessibility to the wire saw, particularly to the cutting wire path extending between the wire web (i.e. cutting field) and a storage spool.

The object is achieved by a wire saw for cutting a piece of material, particularly for slicing, squaring and/or bricking a piece of semiconductor material and/or for cutting a plurality of wafers from a workpiece, comprising:
- a housing and
- a first compartment in which wire guide rollers for supporting a cutting field formed from a cutting wire are arranged,
- a second compartment in which a first cutting wire spool for storing, at least temporarily, cutting wire in multiple loops is arranged,
- a first cutting wire path extending from one of the wire guide rollers to the first cutting wire spool, wherein at least a portion of the first cutting wire path is accessible from outside the wire saw through a first opening formed in the housing of the wire saw by an operator who stands outside the wire saw, wherein a main portion of the first cutting wire path extends between a first deflection pulley, which along the first cutting wire path is the closest pulley to one of the wire guide rollers, and a second deflection pulley, which along the first cutting wire path is the closest pulley to the first cutting wire spool, and wherein this main portion of the first cutting wire path is accessible from outside the wire saw through the first opening by an operator who stands outside the wire saw, wherein at least one of the wire guide rollers is accessible, preferably continuously accessible, preferably along its entire length, through the first opening.

Here, the first opening gives not only access to the second compartment but also to the first compartment.

The second compartment is separated from the first compartment. The cutting wire extends from the first compartment to the second compartment. By the first opening the accessibility is highly increased. The cutting wire path, that may include deflection pulleys for deflecting the cutting wire, and its surroundings may be cleaned and maintained easily. Exchange of the cutting wire becomes uncomplicated and time saving.

The first cutting wire path extends from one of the wire guide rollers to the first cutting wire spool. I.e. the first cutting wire path is defined as a cutting wire path which starts at one of the wire guide rollers and ends at the first cutting wire spool. In the same way the second cutting wire path (see below) is defined as cutting wire path which starts at one of the wire guide rollers and ends at the second cutting wire spool.

In the present application "accessible from outside the wire saw" means: accessible by an operator who stands outside the wire saw. With other words: an operator standing outside the wire saw is able to handle - i.e. clean, remove, exchange and/or maintain - corresponding part(s), i.e. at least parts extending and/or arranged along said portion of the first cutting wire path, preferably the complete wire in the first cutting wire path, particularly the cutting wire itself and/or deflection pulleys and/or a (linear) guide e.g. for guiding a deflection pulley and/or the cutting wire spool. It is preferred if the operator is able to see the complete first cutting wire path from outside the wire saw.

"Continuously accessible from outside the wire saw" means that a continuous access is provided to the cutting wire path without interruptions. The overall cutting wire path is not hidden by any obstacles and/or not guided through holes. Particularly, the cutting wire or an imaginary wire can be drawn from the cutting wire spool to the wire guide rollers, possibly passing pulleys, but without guiding it through holes and preferably without letting it pass behind frame parts from the point of view of the operator (which stands outside the wire saw). Moreover, the end portion of the cutting wire can be held by the operator, e.g. by means of a gripper or by his hand, and brought from the cutting wire spool to the wire guide rollers without letting it go (possibly giving it over to another griper or hand) and thus place it in its position for cutting.

Preferably, said accessible portion of the first cutting wire path is arranged less than 40 cm, preferably less than 30 cm preferably less than 20 cm, behind the opening plane (plane of the housing in which the first opening is formed) and/or behind an openable cover covering the first opening (in the operational state). Here, the operator has to put only his hands and arms into the wire saw.

In a preferred embodiment the wire saw comprises
a third compartment in which a second cutting wire spool for storing, at least temporarily, cutting wire in multiple loops is arranged, and
a second cutting wire path extending from one of the wire guide rollers to the second cutting wire spool,
wherein the second cutting wire path is accessible, preferably continuously accessible, from outside the wire saw through a second opening formed in the housing of the wire saw.

While the one of the second and third compartments accommodates the spool for supplying (unused) cutting wire to the wire web, the other compartment accommodates the spool for receiving (used) cutting wire from the wire web. Preferably, said accessible portion of the second cutting wire path is arranged less than 40 cm, preferably less than 30 cm preferably less than 20 cm, behind the opening plane (plane of the housing in which the second opening is formed) and/or behind an openable cover covering the second opening (in the operational state). Here, the operator has to put only his hands and arms into the wire saw.

In the following embodiments will be described by means of the second compartment, first cutting wire spool, first cutting wire path, first opening, etc. However, in alternative embodiments the same features may be transferred to the third compartment, second cutting wire spool, second cutting wire path, second opening. Preferably, the first opening is formed on a first side of the wire saw and the second opening is formed on a second side of the wire saw, wherein preferably the second side is opposite to the first side and wherein preferably the first side and the second side extend along, preferably essentially parallel to, the rotational axes of the wire guide rollers. While the first and second cutting wire paths are spatially separated from each other, high accessibility and a space-saving design may be achieved.

In a preferred embodiment the first cutting wire path comprises at least two, more preferred at least three, rotatable deflection pulley(s) for deflecting the cutting wire, wherein the at least one, preferably at least two, more preferred at least three, deflection pulley(s), is/are accessible from outside the wire saw through the first opening.

Preferably, the at least two deflection pulleys are arranged less than 40 cm, preferably less than 30 cm preferably less than 20 cm, behind the plane of the first opening and/or behind an openable cover covering the first opening.

In such a way the deflection pulleys, which are prone to wear and contamination, may be easily cleaned, exchanged and maintained.

Preferably, each point of the main portion of the first cutting wire path is arranged less than 40 cm, preferably less than 30 cm preferably less than 20 cm, behind the plane of the first opening and/or behind an openable cover covering the first opening.

Preferably, the first cutting wire path comprises a third deflection pulley which along the first cutting wire path is arranged between the first deflection pulley and the second deflection pulley, wherein preferably the third deflection pulley is a tensioning pulley for tensioning the cutting wire.

Preferably, the rotational axis of the at least one deflection pulley extends transverse, preferably perpendicular, to the rotational axis of the cutting wire spool. In such a way a space saving design may be achieved, since the run of the cutting wire path may be oriented along the rotational axis of the wire guide rollers (spanning the cutting field).

Preferably, the at least one deflection pulley, preferably all deflection pulleys, of the first cutting wire path is/are arranged in the second compartment. Here, they are optimally protected from dirt, moisture, and particles emanating from the first compartment (i.e. cutting compartment).

Preferably, at least 25%, preferably at least 50% of the first cutting wire path extends along, preferably essentially parallel to, the rotational axes of the wire guide rollers, preferably at least in one position of deflection pulley(s) (9a, 9b, 9c), preferably of second deflection pulley (9c). This results in a space-saving design, since the dimensions of the wire saw perpendicular to the rotational of the wire guide rollers may be significantly reduced.

Preferably, the first opening is formed on a first side of the wire saw, wherein the first side extends along, preferably parallel to, the rotational axes of the wire guide rollers. This aspect also optimized space-saving design.

Preferably, the first cutting wire spool is accessible, preferably continuously accessible, preferably along its entire length, through the first opening.

Preferably, the first cutting wire spool is accessible, preferably through the first opening, along its entire length from a first side of the wire saw, said first side extending along, preferably essentially parallel to, the rotational axes of the wire guide rollers.

Preferably, an end face of the first cutting wire spool is accessible, preferably through the first opening, from a third side of the wire saw, wherein the third side extends transverse, preferably perpendicular to the rotational axes of the wire guide rollers.

Preferably, the first cutting wire spool is removably mounted to the wire saw wherein the first cutting wire spool may be removed from the wire saw by axial movement only. This facilitates exchange of spools, since only one movement in one direction is necessary.

Preferably, the rotational axis of the first cutting wire spool is essentially parallel to the rotational axes of the wire guide rollers. Here also a space-saving design may be achieved.

Preferably, the housing comprises at least one openable cover which in the closed state covers the first opening at least partially. The cover may be e.g. a slidable cover, a hinged cover (e.g. in form of a door), a flexible cover or a (roller) shutter. Preferably, the wire saw comprises a cutting wire feedthrough for guiding the cutting wire from the first compartment to the second compartment.

The cutting wire feedthrough may be e.g. formed as an opening or a duct, preferably a (straight) tube.

The second compartment which is separated from the first compartment allows to accommodate a portion of the cutting wire, preferably also (deflection and/or tension) pulleys and/or spools for storing cutting wire. The cutting wire coming from the cutting field extends through the feedthrough and runs and/or is (temporarily) stored within the second compartment. The cutting wire feedthrough may protect the cutting wire when passing from the first compartment to the second compartment. The feedthrough may be provided in a (openable) wall separating the second compartment from the first compartment.

Preferably, the wire saw comprises a first openable cover having a first (i.e. closing) edge, preferably in form of a flexible sealing or lip, which in the closed state of the first cover faces or lies against a second, preferably stationary edge, preferably in form of a flexible sealing or lip, and which in the opened state of the first cover is distanced from the second edge, wherein the cutting wire feedthrough extends between the first edge and the second edge. Here, direct access is provided to the corresponding cutting wire portion when opening the first cover. This allows for simple exchange of cutting wire. The flexible sealing or lip prevents cutting liquid, dirt and moisture from entering the second compartment.

Preferably, the housing comprises a first openable cover and a second openable cover, wherein the first cover covers at least partially, preferably mainly, the first compartment and the second cover covers at least partially, preferably mainly, the second compartment. It is preferred if the covers may be opened independently of each other.

Preferably, in the closed state of the covers the first cover and the second cover are adjacent to each other, preferably touch each other.

Further embodiments of the invention are indicated in the figures and in the dependent claims. The list of reference marks forms part of the disclosure. The invention will now be explained in detail by the drawings. In the drawings:
- Fig. 1: shows a wire saw according to the invention,
- Fig. 2: shows a preferred embodiment of an inventive wire saw,
- Fig. 3: shows parts of a wire saw from a top view,
- Fig. 4: shows a side view of a wire saw,
- Fig. 5: the transition area of cutting wire between first and second compartment with openable cover,
- Fig. 6: a view through the opening giving access to the cutting wire path,
- Fig. 7: a wire saw with an operator gripping through the opening.

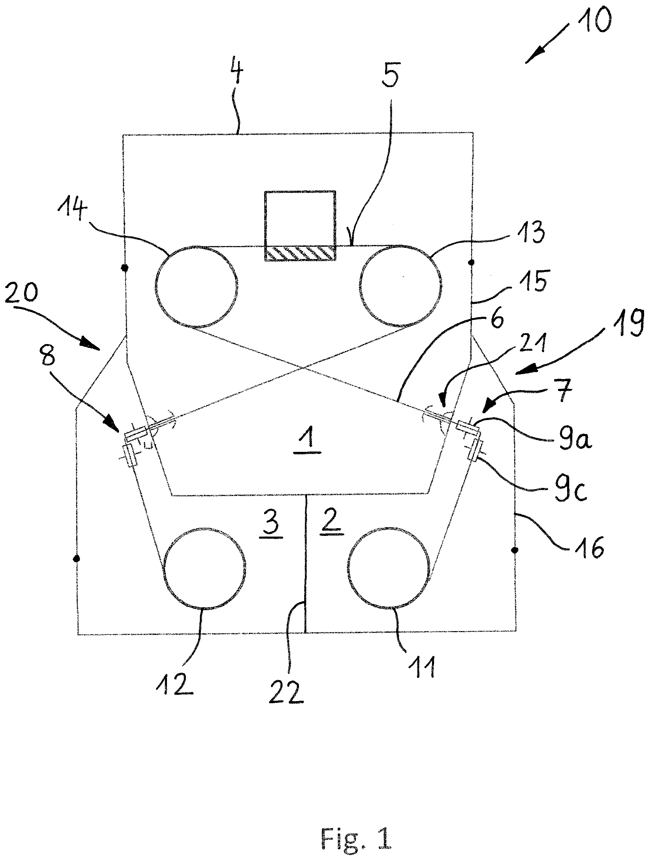

Fig. 1 schematically shows a wire saw 10 for cutting a piece of material (indicated as square in the area of the cutting field 5), particularly for slicing, squaring and/or bricking a piece of semiconductor material and/or for cutting a plurality of wafers from a workpiece. The wire saw 10 comprises a housing 4. In the housing 4 wire guide rollers 13, 14 are arranged within a first compartment 1. Wire guide rollers 13, 14 support a cutting field 5 formed from a cutting wire 6.

The wire saw 10 also comprises a second compartment 2 in which a first cutting wire spool 11 for storing, at least temporarily, cutting wire 6 in multiple loops (also called: storage spool; e.g. for unused wire) is arranged. A first cutting wire path 7 extends from one of the wire guide rollers 13 to the first cutting wire spool 11.

The wire saw 10 also comprises a third compartment 3 in which a second cutting wire spool 12 for storing, at least temporarily, cutting wire 6 in multiple loops (also called: storage spool; e.g. for used wire) is arranged. A second cutting wire path 8 extends from one of the wire guide rollers 14 to the second cutting wire spool 12.

It would be possible to have an additional spool attached to the first and or second cutting wire spool 11 which additional spool may be used for temporarily receiving cutting wire (which is currently in use) in non-overlapping wires.

The rotational axis of the first cutting wire spool 11 and the rotational axis of the second cutting wire spool 12 are essentially parallel to the rotational axes of the wire guide rollers 13, 14.

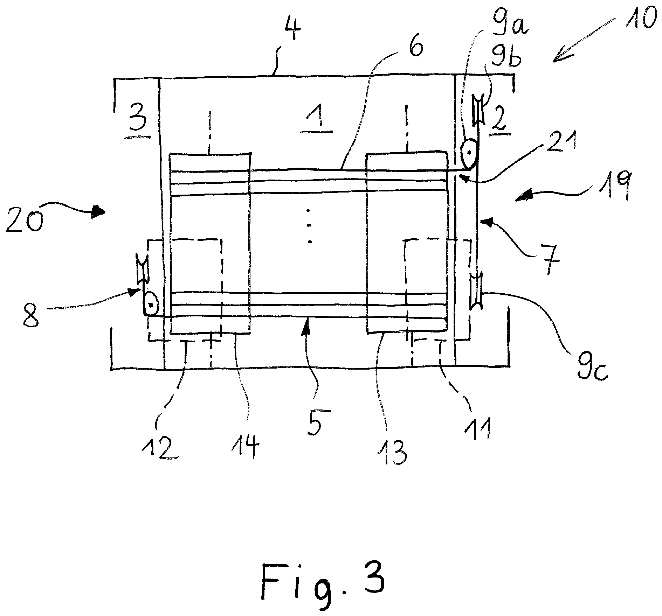

As can be seen from Fig. 1 and 3 at least a portion of the first cutting wire path 7 (here: the entire first cutting wire path 7) is accessible from outside the wire saw 10 through a first opening 19 formed in the housing 4.

In the preferred embodiment of Fig. 3 at least a portion of the second cutting wire path 8 (here: the entire second cutting wire path 8) is accessible through a second opening 20 formed in the housing 4.

As can be seen, the respective cutting wire path is not hidden by any obstacles and/or not guided through holes so that it can be completely accessed through the respective opening 19, 20.

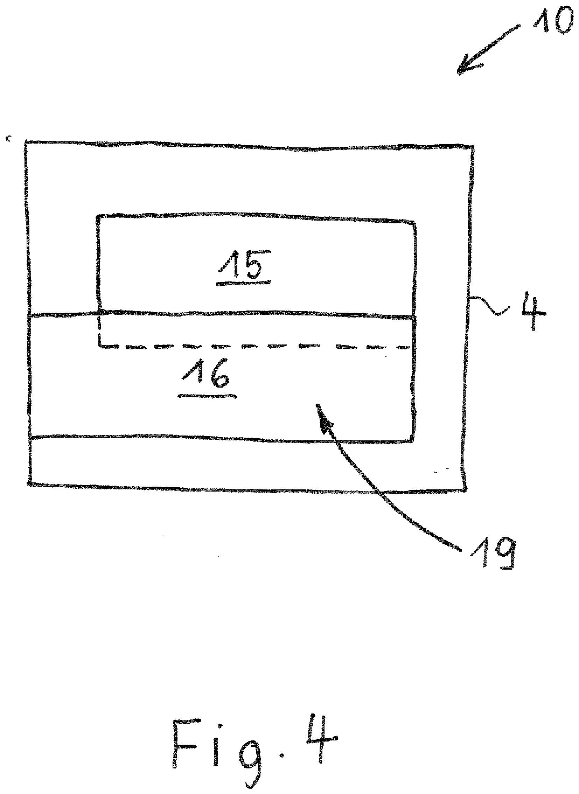

It is preferred if said accessible portion of the second cutting wire path 8 is arranged less than 40 cm, preferably less than 30 cm preferably less than 20 cm, behind the plane of the respective opening 20 and/or behind an openable cover 16 (see Fig. 1 and 4) covering the respective opening 20.

As can be seen particularly from Fig. 3 the first opening 19 is formed on a first side of the wire saw 10 and the second opening 20 is formed on a second side of the wire saw 10. The second side is opposite to the first side. The first side and the second side extend along (here: essentially parallel to) the rotational axes of the wire guide rollers 13, 14.

As can be seen from Fig. 1-3 the first cutting wire path 7 comprises three rotatable deflection pulleys 9a, 9b, 9c for deflecting the cutting wire 6. The deflection pulleys 9a, 9b, 9c are accessible from outside the wire saw 10 through the first opening 19. It is preferred if the deflection pulleys 9a, 9b, 9c are arranged less than 40 cm, preferably less than 30 cm preferably less than 20 cm, behind the plane of the first opening 19 and/or behind an openable cover 16 covering the first opening 19.

A main portion of the first cutting wire path 7 extends between a first deflection pulley 9a, which along the first cutting wire path 7 is closest to one of the wire guide rollers 13, and a second deflection pulley 9c, which along the first cutting wire path 7 is closest to the first cutting wire spool 11. The main portion of the first cutting wire path 7 is accessible from outside the wire saw 10 through the first opening 19.

The first cutting wire path 7 also comprises a third deflection pulley 9b which along the first cutting wire path 7 is arranged between the first deflection pulley 9a and the second deflection pulley 9c. The third deflection pulley 9c is a tensioning pulley (i.e. an adjustable or moveable pulley) for tensioning the cutting wire 6.

The rotational axes of the deflection pulleys 9a, 9b, 9c extend transverse, preferably perpendicular, to the rotational axis of the first cutting wire spool 11 and/or to the rotational axes of the wire guide rollers 13, 14.

As can be seen from Figs. 1-3 all deflection pulleys 9a, 9b, 9c of the first cutting wire path 7 are arranged in the second compartment 2. As can be seen from Fig. 3 at least 50% of the first cutting wire path 7 extends along, preferably essentially parallel to, the rotational axes of the wire guide rollers 13, 14.

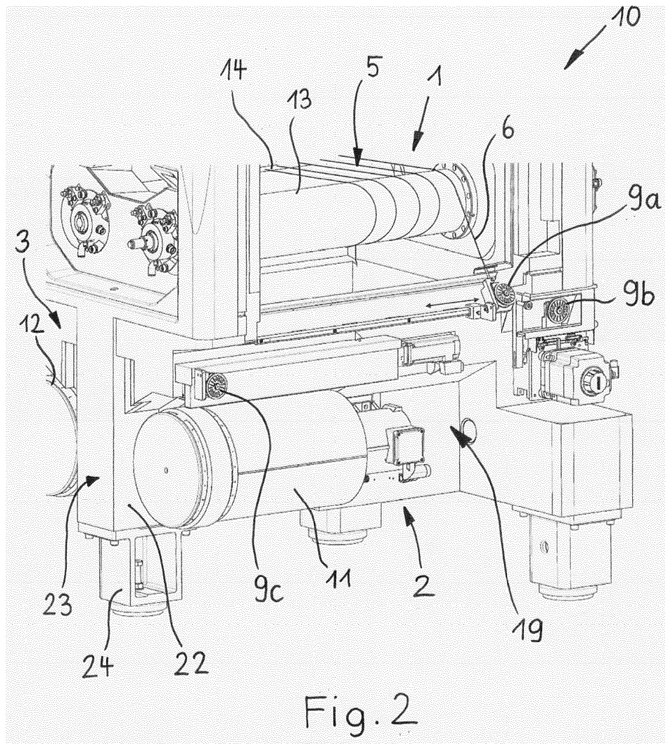

As can be seen from Fig. 2 one of the wire guide rollers 13 is accessible along its entire length through the first opening 19. Also, the first cutting wire spool 11 is accessible along its entire length through the first opening 19.

As can be seen from Fig. 2 the first cutting wire spool 11 is accessible through the first opening 19 not only along its entire length from a first side but also from a third side, wherein the third side extends transverse, preferably perpendicular to the rotational axes of the wire guide rollers 13, 14.

The first cutting wire spool 11 is removably mounted to the wire saw 10. It is preferred if the first cutting wire spool 15 is removable from the wire saw 10 by axial movement only (Fig. 2).

In a preferred aspect of the invention housing 4 comprises at least one openable cover 15, 16 which in the closed state covers the first opening 19 at least partially. The cover(s) are not shown in Fig. 2 and 3, but are apparent from Figs. 1 and 4.

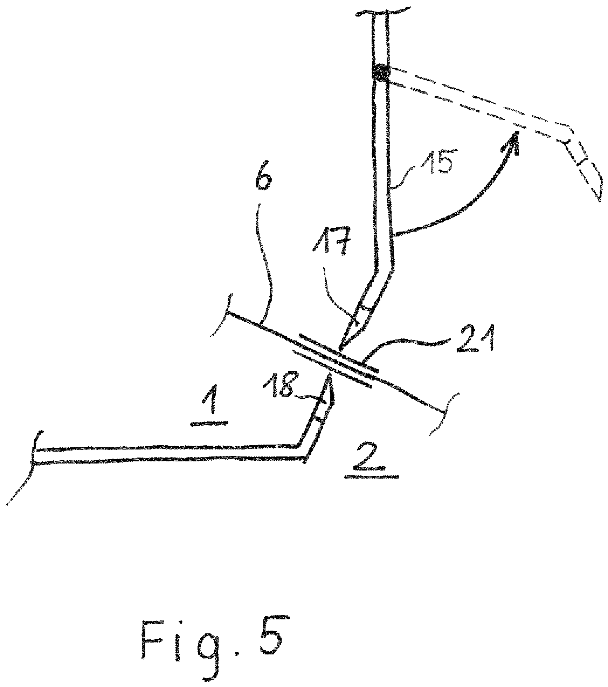

As can be seen from the wire saw 10 comprises at least one cutting wire feedthrough 21 for guiding the cutting wire 6 from the first compartment 1 to the second compartment 2 (or to the third compartment 3). In the embodiment of Fig. 5 the wire saw 10 comprises a first openable cover 15 having a first (closing) edge 17, preferably in form of a flexible sealing or lip, which in the closed state of the first cover 15 faces or lies against a second stationary edge 18, preferably also in form of a flexible sealing or lip. The cutting wire feedthrough 21 - and thus also the cutting wire 6 - extends between the first edge 17 and the second edge 18. In the opened state of the first cover 15 (dashed line in Fig. 5) the first edge 17 is distanced from the second edge 18.

In the embodiments of Fig. 1 and 4 housing 4 comprises a first openable cover 15 and a second openable cover 16, wherein the first cover 15 covers the first compartment 1 and the second cover 16 covers the second compartment 2. In the closed state of the covers 15, 16 the first cover 15 and the second cover 16 may be adjacent to each other, preferably touch each other.

The wire saw can further comprise
a first compartment 1 in which wire guide rollers 13, 14 for supporting a cutting field 5 formed from a cutting wire 6 are arranged,
a second compartment 2 in which a first cutting wire spool 11 for storing, at least temporarily, cutting wire 6 in multiple loops is arranged, and a first cutting wire path 7 extending from one of the wire guide rollers 13, 14 to the first cutting wire spool 11.

The second compartment 2 is arranged below, preferably directly below (i.e. in vertical direction below), the first compartment 1.

It is preferred if also the third compartment 3 is arranged below, preferably directly below, the first compartment 1 (see Fig. 1 and 2). Here, also the first cutting wire spool 11 and the second cutting wire spool 12 are arranged in vertical direction below the first compartment 1. The bottom wall of the first compartment 1 may form the ceiling of the second compartment 2 and/or the ceiling of the third compartment 3. As can be seen from Fig. 1 and 2 the second compartment 2 and the third compartment 3 are arranged side by side and separated from each other by a, preferably vertical, partition wall 22. The partition wall 22 extends below, preferably centrally below, the first compartment 1.

The first cutting wire spool 11 is rotatably mounted to a first side of the partition wall 22 (e.g. by means of screws) and the second cutting wire spool 12 is rotatably mounted to a second side of the partition wall 22 (e.g. by means of screws), which second side is opposite to the first side.

It is preferred if the partition wall 22 forms a load carrying portion of the frame 23 which also supports the wire guide rollers 13, 14. The partition wall 22 may have at least one foot 24, which is arranged vertically below the first compartment 1.

In the following further preferred embodiments are described:
The first cutting wire spool 11 may have or be connected to a first drive, preferably a motor, wherein preferably the first drive is arranged in the second compartment 2.

The second cutting wire spool 12 may have or be connected to a second drive, preferably a motor, wherein preferably the second drive is arranged in the third compartment 3.

The wire saw 10 may of course (in the operational state) comprise a cutting wire 6 forming the cutting field 5 and extending along the first cutting wire path 7. The cutting wire 6 may be a fixed abrasive wire, preferably a diamond wire.

Preferably, the weight of the wire saw amounts to at least 4000 kg, preferably to at least 5500 kg.

Preferably, the weight carried by the foot (of the partition wall), which is arranged vertically below the first compartment, amounts to at least 1800 kg, preferably to at least 2200 kg.

Preferably, the diameter of at least one of the wire guide rollers amounts to at least 12 cm, preferably to at least 15 cm.

The wire receiving surface of at least one of the wire guide rollers 13, 14 is formed from a plurality of wire guiding groove.

At least one of the wire guiding rollers 13, 14 may be rotatably mounted to the frame 23 of the wire saw 10 by means of at least one ball bearing and/or at least one roller bearing,

At least one of the wire guiding rollers 13, 14 and/or the first cutting wire spool 11 and/or the second cutting wire spool 12 is/are at least partially formed from metal, preferably steel, and/or from a (reinforced) polymer.

As can be seen from Fig. 2 a horizontal cross-section of the wire saw's frame 23 may be T-shaped.

The partition wall 22 may be made from metal, preferably steel, and/or from mineral casting.

The thickness of the partition wall 22 may amount to at least 4 cm, preferably to at least 7 cm.

The partition wall 22 may have a hollow profile.

Fig. 4 shows a side view of a wire saw 10 with first cover 15 and second cover 16 closing the first opening 19. The dashed line in Fig. 4 indicates that the second cover 16 may (partially) overlap with the first cover 15.

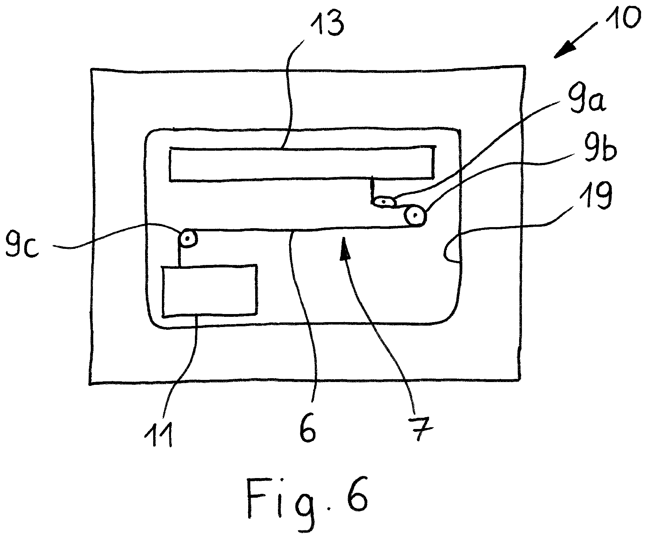

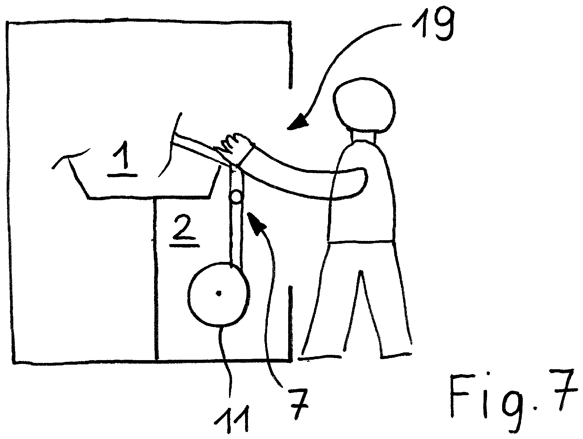

Fig. 6 shows (from outside the wire saw 10) a view through the opening 19 giving access to the cutting wire path 7. The situation for the operator standing outside the wire saw 10 is seen in Fig. 7. As can be seen from these figures the accessibility is increased, since the operator may handle the cutting wire 6 as well as deflection pulleys 9a, 9b, 9c - preferably also the cutting wire spool 11 - from outside the wire saw 10.

The invention is not restricted to the embodiments described above. Other variants will be obvious for the person skilled in the art and are considered to lie within the scope of the invention as defined in the following claims.

### List of reference signs

- 1: first compartment
- 2: second compartment
- 3: third compartment
- 4: housing
- 5: cutting field
- 6: cutting wire
- 7: first cutting wire path
- 8: second cutting wire path
- 9a, 9b, 9c: pulley
- 10: wire saw
- 11: first cutting wire spool
- 12: second cutting wire spool
- 13: wire guide roller
- 14: wire guide roller
- 15: first cover
- 16: second cover
- 17: first (closing) edge
- 18: second (stationary) edge
- 19: first opening
- 20: second opening
- 21: cutting wire feedthrough
- 22: partition wall
- 23: frame
- 24: foot

## Claims

1. Wire saw (10) for cutting a piece of material, particularly for slicing, squaring and/or bricking a piece of semiconductor material and/or for cutting a plurality of wafers from a workpiece, comprising:
- a housing (4) and
- a first compartment (1) in which wire guide rollers (13, 14) for supporting a cutting field (5) formed from a cutting wire (6) are arranged,
- a second compartment (2) in which a first cutting wire spool (11) for storing, at least temporarily, cutting wire (6) in multiple loops is arranged,
- a first cutting wire path (7) extending from one of the wire guide rollers (13) to the first cutting wire spool (11),
wherein at least a portion of the first cutting wire path (7) is accessible from outside the wire saw (10) through a first opening (19) formed in the housing (4) of the wire saw (10) by an operator who stands outside the wire saw, wherein a main portion of the first cutting wire path (7) extends between a first deflection pulley (9a), which along the first cutting wire path (7) is the closest pulley to one of the wire guide rollers (13), and a second deflection pulley (9c), which along the first cutting wire path (7) is the closest pulley to the first cutting wire spool (11), and wherein this main portion of the first cutting wire path (7) is accessible from outside the wire saw (10) through the first opening (19) by an operator who stands outside the wire saw,
**characterized in that** at least one of the wire guide rollers (13, 14) is accessible, preferably continuously accessible, preferably along its entire length, through the first opening (19).

2. Wire saw according to claim 1, **wherein** the wire saw (10) comprises:
- a third compartment (3) in which a second cutting wire spool (12) for storing, at least temporarily, cutting wire (6) in multiple loops is arranged, and
- a second cutting wire path (8) extending from one of the wire guide rollers (14) to the second cutting wire spool (12),
wherein at least a portion of the second cutting wire path (8), preferably the entire second cutting wire path (8) is accessible, preferably continuously accessible, from outside the wire saw (10) through a second opening (20) formed in the housing (4) of the wire saw (10),
wherein preferably said portion of the second cutting wire path (8) is arranged less than 40 cm, preferably less than 30 cm preferably less than 20 cm, behind the plane of the second opening (20) and/or behind an openable cover covering the second opening (20).

3. Wire saw according to claim 2, **wherein** the first opening (19) is formed on a first side of the wire saw (10) and the second opening (20) is formed on a second side of the wire saw (10), wherein preferably the second side is opposite to the first side and wherein preferably the first side and the second side extend along, preferably essentially parallel to, the rotational axes of the wire guide rollers (13, 14).

4. Wire saw according to one of the preceding claims, **wherein** the first cutting wire path (7) comprises at least two, more preferred at least three, rotatable deflection pulley(s) (9a, 9b, 9c) for deflecting the cutting wire (6), wherein the at least two, more preferred at least three, deflection pulley(s) (9a, 9b, 9c), are accessible by an operator from outside the wire saw (10) through the first opening (19),
wherein preferably the at least two deflection pulleys (9a, 9b, 9c) are arranged less than 40 cm, preferably less than 30 cm preferably less than 20 cm, behind the plane of the first opening (19) and/or behind an openable cover (15, 16) covering the first opening (19).

5. Wire saw according to one of the preceding claims, **wherein**
each point of the main portion of the first cutting wire path (7) is arranged less than 40 cm, preferably less than 30 cm preferably less than 20 cm, behind the plane of the first opening (19) and/or behind an openable cover (16) covering the first opening (19).

6. Wire saw according to one of the preceding claims, **wherein** the first cutting wire path (7) comprises a third deflection pulley (9b) which along the first cutting wire path (7) is arranged between the first deflection pulley (9a) and the second deflection pulley (9c), wherein preferably the third deflection pulley (9c) is a tensioning pulley for tensioning the cutting wire (6).

7. Wire saw according to one of the claims 4 to 6, **wherein** the rotational axis of the at least one deflection pulley (9a, 9b, 9c) extends transverse, preferably perpendicular, to the rotational axis of the first cutting wire spool (11) and/or to the rotational axes of the wire guide rollers (13, 14) and/or **wherein** the at least one deflection pulley (9a, 9b, 9c), preferably all deflection pulleys (9a, 9b, 9c), of the first cutting wire path (7) is/are arranged in the second compartment (2).

8. Wire saw according to one of the preceding claims, **wherein** at least 25%, preferably at least 50% of the first cutting wire path (7) extends along, preferably essentially parallel to, the rotational axes of the wire guide rollers (13, 14), preferably at least in one position of deflection pulley(s) (9a, 9b, 9c), preferably of second deflection pulley (9c).

9. Wire saw according to one of the preceding claims, **wherein** the first opening (19) is formed on a first side of the wire saw (10), wherein the first side extends along, preferably parallel to, the rotational axes of the wire guide rollers (13, 14).

10. Wire saw according to one of the preceding claims,
**wherein** the first cutting wire spool (11) is accessible, preferably continuously accessible, preferably along its entire length, through the first opening (19).

11. Wire saw according to one of the preceding claims, **wherein** the first cutting wire spool (11) is accessible, preferably through the first opening (19), along its entire length from a first side of the wire saw (10), said first side extending along, preferably essentially parallel to, the rotational axes of the wire guide rollers (13, 14).

12. Wire saw according to one of the preceding claims, **wherein** an end face of the first cutting wire spool (11) is accessible, preferably through the first opening (19), from a third side of the wire saw (10), wherein the third side extends transverse, preferably perpendicular to the rotational axes of the wire guide rollers (13, 14), **wherein** preferably the first cutting wire spool (11) is removably mounted to the wire saw (10), wherein the first cutting wire spool (15) may be removed from the wire saw (10) by axial movement only.

13. Wire saw according to one of the preceding claims, **wherein** the rotational axis of the first cutting wire spool (11) and/or the rotational axis of the second cutting wire spool (12) is/are essentially parallel to the rotational axes of the wire guide rollers (13, 14).

14. Wire saw according to one of the preceding claims, **wherein** the housing (4) comprises at least one openable cover (15, 16) which in the closed state covers the first opening (19) at least partially.

15. Wire saw according to one of the preceding claims, **wherein** the wire saw (10) comprises a first openable cover (15) having a first edge (17), preferably in form of a flexible sealing or lip, which in the closed state of the first cover (15) faces or lies against a second, preferably stationary, edge (18), preferably in form of a flexible sealing or lip, and which in the opened state of the first cover (15) is distanced from the second edge (18), wherein the cutting wire feedthrough (21) extends between the first edge (17) and the second edge (18).

## Patentansprüche

1. Drahtsäge (10) zum Zuschneiden eines Stücks Material, insbesondere zum Zuschneiden eines Stücks Halbleitermaterial in Scheiben, Würfel und/oder Quader und/oder zum Zuschneiden mehrerer Wafer aus einem Werkstück, die Folgendes umfasst:
- ein Gehäuse (4) und
- einen ersten Raum (1), in dem Drahtführungsrollen (13, 14) zum Halten eines von einem Schneiddraht (6) gebildeten Schneidbereichs (5) angeordnet sind,
- einen zweiten Raum (2), in dem eine erste Schneiddrahtspule (11) zum zumindest vorübergehenden Aufbewahren von Schneiddraht (6) in mehreren Schleifen angeordnet ist,
- einen ersten Schneiddrahtweg (7), der von einer der Drahtführungsrollen (13) aus bis zu der ersten Schneiddrahtspule (11) verläuft,
wobei zumindest ein Abschnitt des ersten Schneiddrahtwegs (7) über eine in dem Gehäuse (4) der Drahtsäge (10) ausgebildete erste Öffnung (19) von außerhalb der Drahtsäge (10) her für eine Bedienperson zugänglich ist, die außerhalb der Drahtsäge steht,
wobei ein Hauptabschnitt des ersten Schneiddrahtwegs (7) zwischen einer ersten Umlenkrolle (9a), bei der es sich um die einer der Drahtführungsrollen (13) am nächsten liegende Rolle auf dem ersten Schneiddrahtweg (7) handelt, und einer zweiten Umlenkrolle (9c) verläuft, bei der es sich um die der ersten Schneiddrahtspule (11) am nächsten liegende Rolle auf dem ersten Schneiddrahtweg (7) handelt, und dieser Hauptabschnitt des ersten Schneiddrahtwegs (7) für eine Bedienperson, die außerhalb der Drahtsäge steht, über die erste Öffnung (19) von außerhalb der Drahtsäge (10) her zugänglich ist,
**dadurch gekennzeichnet, dass** mindestens eine der Drahtführungsrollen (13, 14) vorzugsweise ständig vorzugsweise über ihre gesamte Länge hinweg über die erste Öffnung (19) zugänglich ist.

2. Drahtsäge nach Anspruch 1, wobei die Drahtsäge (10) Folgendes umfasst:
- einen dritten Raum (3), in dem eine zweite Schneiddrahtspule (12) zum zumindest vorübergehenden Aufbewahren von Schneiddraht (6) in mehreren Schleifen angeordnet ist, und
- einen zweiten Schneiddrahtweg (8), der von einer der Drahtführungsrollen (14) aus bis zu der zweiten Schneiddrahtspule (12) verläuft,
wobei zumindest ein Abschnitt des zweiten Schneiddrahtwegs (8), vorzugsweise der gesamte zweite Schneiddrahtweg (8), vorzugsweise ständig über eine in dem Gehäuse (4) der Drahtsäge (10) ausgebildete zweite Öffnung (20) von außerhalb der Drahtsäge (10) zugänglich ist,
wobei der Abschnitt des zweiten Schneiddrahtwegs (8) weniger als 40 cm, vorzugsweise weniger als 30 cm, vorzugsweise weniger als 20 cm hinter der Ebene der zweiten Öffnung (20) und/oder hinter einer die zweite Öffnung (20) abdeckenden, öffenbaren Abdeckung angeordnet ist.

3. Drahtsäge nach Anspruch 2, wobei die erste Öffnung (19) auf einer ersten Seite der Drahtsäge (10) und die zweite Öffnung (20) auf einer zweiten Seite der Drahtsäge (10) ausgebildet ist, wobei die zweite Seite vorzugsweise der ersten Seite gegenüberliegt und die erste und die zweite Seite vorzugsweise an den Rotationsachsen der Drahtführungsrollen (13, 14) entlang, vorzugsweise im Wesentlichen parallel dazu, verlaufen.

4. Drahtsäge nach einem der vorhergehenden Ansprüche, wobei der erste Schneiddrahtweg (7) mindestens zwei, bevorzugt mindestens drei drehbare Umlenkrollen (9a, 9b, 9c) zum Umlenken des Schneiddrahts (6) umfasst, wobei die mindestens zwei, bevorzugt mindestens drei Umlenkrollen (9a, 9b, 9c) für eine Bedienperson über die erste Öffnung (19) von außerhalb der Drahtsäge (10) zugänglich sind,
wobei die mindestens zwei Umlenkrollen (9a, 9b, 9c) vorzugsweise weniger als 40 cm, vorzugsweise weniger als 30 cm, vorzugsweise weniger als 20 cm hinter der Ebene der ersten Öffnung (19) und/oder hinter einer die erste Öffnung (19) abdeckenden, öffenbaren Abdeckung (15, 16) angeordnet sind.

5. Drahtsäge nach einem der vorhergehenden Ansprüche, wobei jede Stelle an dem Hauptabschnitt des ersten Schneiddrahtwegs (7) weniger als 40 cm, vorzugsweise weniger als 30 cm, vorzugsweise weniger als 20 cm hinter der Ebene der ersten Öffnung (19) und/oder hinter einer die erste Öffnung (19) abdeckenden, öffenbaren Abdeckung (16) angeordnet ist.

6. Drahtsäge nach einem der vorhergehenden Ansprüche, wobei der erste Schneiddrahtweg (7) eine dritte Umlenkrolle (9b) umfasst, die auf dem ersten Schneiddrahtweg (7) zwischen der ersten Umlenkrolle (9a) und der zweiten Umlenkrolle (9c) angeordnet ist, wobei es sich bei der dritten Umlenkrolle (9c) vorzugsweise um eine Spannrolle zum Spannen des Schneiddrahts (6) handelt.

7. Drahtsäge nach einem der Ansprüche 4 bis 6, wobei die Rotationsachse der mindestens einen Umlenkrolle (9a, 9b, 9c) quer, vorzugsweise senkrecht, zur Rotationsachse der ersten Schneiddrahtspule (11) und/oder zu den Rotationsachsen der Drahtführungsrollen (13, 14) verläuft und/oder die mindestens eine Umlenkrolle (9a, 9b, 9c), vorzugsweise alle Umlenkrollen (9a, 9b, 9c) im ersten Schneiddrahtweg (7) in dem zweiten Raum (2) angeordnet ist/sind.

8. Drahtsäge nach einem der vorhergehenden Ansprüche, wobei mindestens 25%, vorzugsweise mindestens 50% des ersten Schneiddrahtwegs (7) vorzugsweise in mindestens einer Position der Umlenkrolle(n) (9a, 9b, 9c), vorzugsweise der zweiten Umlenkrolle (9c), an den Rotationsachsen der Drahtführungsrollen (13, 14) entlang, vorzugsweise im Wesentlichen parallel dazu, verlaufen.

9. Drahtsäge nach einem der vorhergehenden Ansprüche, wobei die erste Öffnung (19) auf einer ersten Seite der Drahtsäge (10) ausgebildet ist, wobei die erste Seite an den Rotationsachsen der Drahtführungsrollen (13, 14) entlang, vorzugsweise im Wesentlichen parallel dazu, verläuft.

10. Drahtsäge nach einem der vorhergehenden Ansprüche, wobei die erste Schneiddrahtspule (11) vorzugsweise über ihre gesamte Länge hinweg über die erste Öffnung (19) vorzugsweise ständig zugänglich ist.

11. Drahtsäge nach einem der vorhergehenden Ansprüche, wobei die erste Schneiddrahtspule (11) vorzugsweise über die Öffnung (19) über ihre gesamte Länge hinweg von einer ersten Seite der Drahtsäge (10) aus zugänglich ist, wobei die erste Seite an den Rotationsachsen der Drahtführungsrollen (13, 14) entlang, vorzugsweise im Wesentlichen parallel dazu, verläuft.

12. Drahtsäge nach einem der vorhergehenden Ansprüche, wobei eine Stirnfläche der ersten Schneiddrahtspule (11) vorzugsweise über die erste Öffnung (19) von einer dritten Seite der Drahtsäge (10) aus zugänglich ist, wobei die dritte Seite quer, vorzugsweise senkrecht zu den Rotationsachsen der Drahtführungsrollen (13, 14) verläuft, wobei die erste Schneiddrahtspule (11) vorzugsweise abnehmbar an der Drahtsäge (10) angebracht ist, wobei die erste Schneiddrahtspule (15) nur über eine axiale Bewegung von der Drahtsäge (10) abgenommen werden kann.

13. Drahtsäge nach einem der vorhergehenden Ansprüche, wobei die Rotationsachse der ersten Schneiddrahtspule (11) und/oder die Rotationsachse der zweiten Schneiddrahtspule (12) im Wesentlichen parallel zu den Rotationsachsen der Drahtführungsrollen (13, 14) verlaufen/verläuft.

14. Drahtsäge nach einem der vorhergehenden Ansprüche, wobei das Gehäuse (4) mindestens eine öffenbare Abdeckung (15, 16) umfasst, die die erste Öffnung (19) im geschlossenen Zustand zumindest teilweise abdeckt.

15. Drahtsäge nach einem der vorhergehenden Ansprüche, wobei die Drahtsäge (10) eine erste öffenbare Abdeckung (15) mit einer ersten Kante (17), vorzugsweise in Form einer flexiblen Dichtung oder Lippe, umfasst, die im geschlossenen Zustand der ersten Abdeckung (15) einer zweiten, vorzugsweise festen Kante (18), vorzugsweise in Form einer flexiblen Dichtung oder Lippe, gegenüberliegt oder daran anliegt und im geöffneten Zustand der ersten Abdeckung (15) von der zweiten Kante (18) beabstandet ist, wobei die Schneiddrahtdurchführung (21) zwischen der ersten Kante (17) und der zweiten Kante (18) verläuft.

## Revendications

1. Scie à fil (10) pour découper un morceau de matériau, en particulier pour découper un morceau de matériau semi-conducteur en tranches, en carrés et/ou en briques, et/ou pour découper une pluralité de wafers à partir d'une pièce, comprenant :
- un boîtier (4), et
- un premier compartiment (1) dans lequel sont agencés des rouleaux de guidage de fil (13, 14) pour supporter un champ de découpe (5) formé par un fil de découpe (6),
- un deuxième compartiment (2) dans lequel est agencée une première bobine de fil de découpe (11) pour stocker, au moins temporairement, un fil de découpe (6) avec de multiples boucles,
- un premier chemin de fil de découpe (7) qui s'étend depuis l'un des rouleaux de guidage de fil (13) jusqu'à la première bobine de fil de découpe (11),
dans laquelle au moins une portion du premier chemin de fil de découpe (7) est accessible depuis l'extérieur de la scie à fil (10) à travers une première ouverture (19) formée dans le boîtier (4) de la scie à fil (10) par un opérateur qui se trouve à l'extérieur de la scie à fil,
dans laquelle une portion principale du premier chemin de fil de découpe (7) s'étend entre une première poulie de déflexion (9a), qui est la poulie la plus proche de l'un des rouleaux de guidage de fil (13) le long du premier chemin de fil de découpe (7), et une deuxième poulie de déflexion (9c), qui est la poulie la plus proche de la première bobine de fil de découpe (11) le long du premier chemin de fil de découpe (7), et dans laquelle cette portion principale du premier chemin de fil de découpe (7) est accessible depuis l'extérieur de la scie à fil (10) à travers la première ouverture (19) par un opérateur qui se trouve à l'extérieur de la scie à fil,
**caractérisée en ce qu'**au moins l'un des rouleaux de guidage de fil (13, 14) est accessible, préférablement de manière continue, préférablement sur toute sa longueur, via la première ouverture (19) .

2. Scie à fil selon la revendication 1, dans laquelle la scie à fil (10) comprend :
- un troisième compartiment (3) dans lequel est agencée une deuxième bobine de fil de découpe (12) pour stocker, au moins temporairement, le fil de découpe (6) sur de multiples boucles, et
- un deuxième chemin de fil de découpe (8) qui s'étend depuis l'un des rouleaux de guidage de fil (14) jusqu'à la deuxième bobine de fil de découpe (12),
dans laquelle au moins une portion du deuxième chemin de fil de découpe (8), préférablement l'entièreté du deuxième chemin de fil de découpe (8), est accessible, préférablement de manière continue, depuis l'extérieur de la scie à fil (10) à travers une deuxième ouverture (20) formée dans le boîtier (4) de la scie à fil (10),
dans laquelle ladite portion du deuxième chemin de fil de découpe (8) est préférablement agencée à une distance inférieure à 40 cm, préférablement inférieure à 30 cm, préférablement inférieure à 20 cm, derrière le plan de la deuxième ouverture (20) et/ou derrière un couvercle ouvrable qui recouvre la deuxième ouverture (20).

3. Scie à fil selon la revendication 2, dans laquelle la première ouverture (19) est formée sur un premier côté de la scie à fil (10) et la deuxième ouverture (20) est formée sur un deuxième côté de la scie à fil (10), dans laquelle le deuxième côté est préférablement opposé au premier côté, et dans laquelle le premier côté et le deuxième côté s'étendent préférablement le long des axes de rotation des rouleaux de guidage de fil (13, 14), de manière essentiellement parallèle à ceux-ci.

4. Scie à fil selon l'une des revendications précédentes, dans laquelle le premier chemin de fil de découpe (7) comprend au moins deux, et préférablement au moins trois, poulies de déflexion rotatives (9a, 9b, 9c) pour défléchir le fil de découpe (6), dans laquelle lesdites au moins deux, préférablement au moins trois, poulies de déflexion (9a, 9b, 9c) sont accessibles par un opérateur depuis l'extérieur de la scie à fil (10) à travers la première ouverture (19),
dans laquelle lesdites au moins deux poulies de déflexion (9a, 9b, 9c) sont préférablement agencées à une distance inférieure à 40 cm, préférablement inférieure à 30 cm, préférablement inférieure à 20 cm derrière le plan de la première ouverture (19) et/ou derrière un couvercle ouvrable (15, 16) qui recouvre la première ouverture (19).

5. Scie à fil selon l'une des revendications précédentes, dans laquelle chaque point de la portion principale du premier chemin de fil de découpe (7) est agencé à une distance inférieure à 40 cm, préférablement inférieure à 30 cm, préférablement inférieure à 20 cm derrière le plan de la première ouverture (19) et/ou derrière un couvercle ouvrable (16) qui couvre la première ouverture (19).

6. Scie à fil selon l'une des revendications précédentes, dans laquelle le premier chemin de fil de découpe (7) comprend une troisième poulie de déflexion (9b) qui est agencée le long du premier chemin de fil de découpe (7) entre la première poulie de déflexion (9a) et la deuxième poulie de déflexion (9c), dans laquelle la troisième poulie de déflexion (9c) est préférablement une poulie de mise sous tension pour mettre le fil de découpe (6) sous tension.

7. Scie à fil selon l'une des revendications 4 à 6, dans laquelle l'axe de rotation de ladite au moins une poulie de déflexion (9a, 9b, 9c) s'étend transversalement, préférablement perpendiculairement, à l'axe de rotation de la première bobine de fil de découpe (11) et/ou aux axes de rotation des rouleaux de guidage de fil (13, 14), et/ou dans laquelle ladite au moins une poulie de déflexion (9a, 9b, 9c), préférablement toutes les poulies de déflexion (9a, 9b, 9c), du premier chemin de fil de découpe (7) sont agencées dans le deuxième compartiment (2).

8. Scie à fil selon l'une des revendications précédentes, dans laquelle au moins 25 %, préférablement au moins 50 % du premier chemin de fil de découpe (7) s'étend le long, préférablement essentiellement en parallèle, des axes de rotation des rouleaux de guidage de fil (13, 14), préférablement au moins dans une position de poulies de déflexion (9a, 9b, 9c), préférablement de la deuxième poulie de déflexion (9c).

9. Scie à fil selon l'une des revendications précédentes, dans laquelle la première ouverture (19) est formée sur un premier côté de la scie à fil (10), dans laquelle le premier côté s'étend le long, préférablement en parallèle, des axes de rotation des rouleaux de guidage de fil (13, 14).

10. Scie à fil selon l'une des revendications précédentes, dans laquelle la première bobine de fil de découpe (11) est accessible, préférablement accessible de manière continue, préférablement sur toute sa longueur, à travers la première ouverture (19) .

11. Scie à fil selon l'une des revendications précédentes, dans laquelle la première bobine de fil de découpe (11) est accessible, préférablement à travers la première ouverture (19), sur toute sa longueur depuis un premier côté de la scie à fil (10), ledit premier côté s'étendant le long, préférablement essentiellement en parallèle, des axes de rotation des rouleaux de guidage de fil (13, 14).

12. Scie à fil selon l'une des revendications précédentes, dans laquelle une face d'extrémité de la première bobine de fil de découpe (11) est accessible, préférablement à travers la première ouverture (19), depuis un troisième côté de la scie à fil (10), dans laquelle le troisième côté s'étend transversalement, préférablement perpendiculairement aux axes de rotation des rouleaux de guidage de fil (13, 14), dans laquelle la première bobine de fil de découpe (11) est préférablement montée de manière amovible sur la scie à fil (10), dans laquelle la première bobine de fil de découpe (15) peut être ôtée de la scie à fil (10) uniquement par un mouvement axial.

13. Scie à fil selon l'une des revendications précédentes, dans laquelle l'axe de rotation de la première bobine de fil de découpe (11) et/ou l'axe de rotation de la deuxième bobine de fil de découpe (12) sont essentiellement parallèles aux axes de rotation des rouleaux de guidage de fil (13, 14).

14. Scie à fil selon l'une des revendications précédentes, dans laquelle le boîtier (4) comprend au moins un couvercle ouvrable (15, 16) qui, à l'état fermé, recouvre au moins partiellement la première ouverture (19).

15. Scie à fil selon l'une des revendications précédentes, dans laquelle la scie à fil (10) comprend un premier couvercle ouvrable (15) comportant un premier bord (17), préférablement sous forme d'un joint ou d'une lèvre flexible, qui, à l'état fermé du premier couvercle (15), fait face à un deuxième bord préférablement stationnaire (18) ou s'appuie contre celui-ci, préférablement sous forme d'un joint ou d'une lèvre flexible, et qui, à l'état ouvert du premier couvercle (15), est espacé par rapport au deuxième bord (18), dans laquelle le passage du fil de découpe (21) s'étend entre le premier bord (17) et le deuxième bord (18).
